# EUROPÄISCHE PATENTSCHRIFT

(11) **EP 1 559 611 B1**
(45) Veröffentlichungstag und Bekanntmachung des Hinweises auf die Patenterteilung: **04.01.2012**
(21) Anmeldenummer: 05450010.3
(22) Anmeldetag: 26.01.2005
(51) Int. Cl.: B60N 2/44, A47C 7/46

(54) **Fluidbefüllbarer, volumsveränderlicher Körper**
Fluid fillable, variable volume chamber
Chambre pouvant être remplie de fluide, à volume variable

(30) Priorität: 29.01.2004 AT 1222004
(43) Veröffentlichungstag der Anmeldung: 03.08.2005
(73) Patentinhaber: Hoerbiger Automotive Komfortsysteme GmbH, 86956 Schongau (DE)
(72) Erfinder: Dörfler, Erich, 86899 Landsberg (DE); Bichler, Thomas, 82377 Penzberg (DE)
(74) Vertreter: Grättinger Möhring von Poschinger Patentanwälte Partnerschaft

(56) Entgegenhaltungen:
- DE-U1- 20 307 633
- GB-A- 2 255 905
- GB-A- 2 371 763
- US-A- 5 902 011

## Beschreibung

Die Erfindung betrifft einen fluidbefüllbaren, volumsveränderlichen Körper, bestehend aus zwei übereinanderliegenden, miteinander entlang des umlaufenden Randes durch Verschweißen verbundenen Folien, vorzugsweise aus Kunststoffmaterial, welche Folien überdies einen Scharnierbereich bilden, entlang welches Scharnierbereiches die Folien unter Bildung zweier zumindest teilweise übereinanderliegender Teilbereiche des aufblasbaren Körpers gefaltet sind, und wobei durch die Folien zumindest ein allenfalls den Scharnierbereich durchquerender Verbindungskanal zwischen den beiden Teilbereichen des befüllbaren Körpers ausgebildet ist, der seitlich durch die bei Verbindung der Folien entstandenen Schweißraupen begrenzt ist.

Ein derartiger Körper ist beispielsweise als Stützkissen für einen Kraftfahrzeugsitz in der DE 203 07 633 U1 geoffenbart. Das beschriebene Stützkissen besteht aus zwei Kissenelementen, die randseitig über ein gemeinsames Scharnier verbunden sind und im Gebrauch zumindest teilweise übereinander zu liegen kommen. Dabei kann das Scharnier durch die die Kissenelemente bildenden Folien gebildet sein, wobei gemäß einer beschriebenen Ausführungsform eine Fluidverbindung zwischen den beiden Kissenelementen durch das Scharnier oder durch einen Verbindungskanal vorgesehen sein kann, der durch Folienbereiche gebildet ist, welche die beiden Kissenelemente zusätzlich zum Scharnier miteinander verbinden.

Im Bereich des Scharniers und/oder eines in gleicher Weise mit kleinem Radius gebogenen separaten Verbindungskanals entsteht in der außenliegenden Folie ein Zugspannung, während in der innenliegenden Folie Druckspannung aufgebaut wird. Dies hat zur Folge, daß die Folien mit relativ hoher Kraft aneinander gepresst werden. Der Verbindungskanal setzt somit dem Überströmen des Fluids einen hohen Widerstand entgegen, was sich besonders bei Befüllung oder Entleerung über einen einzelnen Fluidanschluß, aber auch zum Ausgleich zwischen den beiden Kissenelementen sehr negativ auswirkt. Erst ab einem bestimmten Innendruck kann die Anpresskraft der Folien überwunden werden, dann jedoch erfolgt ein relativ schneller, fast schockartiger Fluidaustausch. Ein vollständiges Entleeren des Körpers hingegen ist fast unmöglich, weil unterhalb eines bestimmten Restdrucks der Widerstand des Verbindungskanals nicht mehr überwunden werden kann. Eine ordnungsgemäße Funktion ist also in solchen Fällen nicht gewährleistet.

Es war daher die Aufgabe der vorliegenden Erfindung, einen Körper der eingangs angegebenen Art derart auszugestalten, daß der Überström-Widerstand zwischen den Teilbereichen des Körpers möglichst herabgesetzt und ein einfacher und weicher Fluidaustausch zwischen diesen Teilbereichen selbst bei geringem Druckunterschied sicher gewährleistet ist.

Zur Lösung dieser Aufgabe ist, wie in Anspruch 1 angegeben, der gattungsgemäße fluidbefüllbare Körper weiterhin dadurch gekennzeichnet, daß im Verlauf zumindest eines Verbindungskanals zumindest ein Element vorgesehen ist, welches die Folien auch in entlüftetem Zustand des Körpers über zumindest einen Teil der Breite des Verbindungskanals beabstandet hält, indem die bei Verbindung der Folien entstandenen Schweißraupen einen Abstand zwischen den Folien zumindest im unmittelbaren Nahbereich aufrechterhalten, wobei ferner zwischen den den Verbindungskanal seitlich begrenzenden Schweißraupen weitere Schweißraupen im Wesentlichen in Längsrichtung des Verbindungskanals vorgesehen sind. Damit ist die Fluidverbindung zwischen den Teilbereichen des Körpers immer offengehalten, selbst bei stark abgebogenem oder abgeknicktem Scharnier oder separatem Verbindungskanal. Ein derartig ausgebildeter Körper bietet einen weichen Druckausgleich und Fluidaustausch zwischen seinen Teilbereichen, und ermöglicht auch bei Befüllung und Entleerung mittels allein eines Fluidanschlusses eine weiche und gleichmäßige Befüllung sowie die vollständige Entleerung. Indem die den Verbindungskanal seitlich begrenzenden Schweißraupen einen Abstand zwischen den Folien zumindest im unmittelbaren Nahbereich aufrechterhalten, kann bereits im Zuge der Herstellung des Körpers und seiner Teilbereiche auf einfache Weise der weiche Fluidaustausch zu jeder Zeit sichergestellt werden. Um noch größere Querschnitte im Verbindungskanal für den Fluidaustausch offenzuhalten, sind gemäß der Erfindung weiterhin zwischen den den Verbindungskanal seitlich begrenzenden Schweißraupen weitere Schweißraupen im wesentlichen in Längsrichtung des Verbindungskanals vorgesehen.

Bei Folienmaterialien, bei welchen nur wenig ausgeprägte Schweißraupen entstehen, kann durch spezielle Fertigungsschritte dafür gesorgt werden, daß die Schweißraupen dicker ausgebildet sind als zur sicheren Verbindung der übereinanderliegenden Folien notwendig ist.

In bevorzugter Weiterbildung des erfindungsgemäßen befüllbaren Körpers kann im Verbindungskanal zumindest ein Abstandhalter-Element eingesetzt sein, um den Verbindungskanal in jedem Zustand des Körpers für den Fluidaustausch zwischen den Teilbereichen offen zu halten.

Dabei kann das Abstandhalter-Element durch ein zwischen die den Verbindungskanal bildenden Folienabschnitte eingesetztes zusätzliches Folienstück mit sich in Längsrichtung des Verbindungskanals erstreckenden Schlitzen oder Nuten gebildet sein, entlang dessen Kanten die Folien voneinander beabstandet gehalten sind und somit der Fluidaustausch sichergestellt ist. Für die Fertigung und auch Stabilität des Abstandhalter-Elementes kann eine Verbindung der Schlitz- oder Nut-Wände untereinander von Vorteil sein.

Eine ähnliche Wirkung wie bei in Längsrichtung des Verbindungskanals vorgesehenen Schweißraupen ist für ein Abstandhalter-Element gegeben, das durch einen sich im wesentlichen in Längsrichtung des Verbindungskanals erstreckenden, schmalen Körper gebildet ist.

Alternativ dazu kann auch zumindest ein Abstandhalter-Element aus fluiddurchlässigem Material im Verbindungskanal eingesetzt sein.

Denkbar wären beispielsweise Elemente unter Verwendung von Schaum, Elemente aus porösen Materialien, vorzugsweise Kunststoffen, oder zwischen die Folien eingelegte Gewebe oder Gewirke.

Gemäß einer weiteren vorteilhaften Ausführungsform der Erfindung ist vorgesehen, daß eine der den Körper begrenzenden Folien, vorzugsweise die bei Faltung des Körpers außen liegenden Folie, zumindest im Bereich des Verbindungskanals eine größere Breite aufweist als die gegenüberliegende Folie und zur Bildung jedes Verbindungskanals mehrere Aufwölbungen ausbildet. Als zusätzliches Element kann hier die gegenüber der schmaleren Folie überschüssige Breite der breiteren Folie angesehen werden. Dieser Breitenunterschied führt dazu, daß beim Abknicken bzw. Abbiegen des Verbindungsbereiches die Folien nicht mehr aneinandergepresst werden. Durch Ausbildung von Wellen in der breiteren Folie entstehen mehrere nebeneinander liegende, immer offen verbleibende Verbindungskanäle. Die Ausbildung von Aufwölbungen bzw. Wellen in der breiteren Folie kann durch Vorkehrungen im Werkzeug zur Herstellung des Körpers begünstigt werden.

Vorteilhafterweise kann im Fall der Wellenbildung der breiteren Folie als zusätzliches Merkmal vorgesehen sein, daß zwischen jeweils zwei von mehreren Aufwölbungen die erfindungsgemäß vorgesehenen zusätzlichen Schweißraupen angeordnet sind. Diese begünstigen das Offenhalten der parallelen Verbindungskanäle, indem sie die Folien im Nahbereich der Schweißraupen beabstandet halten.

In der nachfolgenden Beschreibung soll die Erfindung anhand von in den beigefügten Zeichnungen dargestellten Ausführungsbeispielen näher erläutert werden.

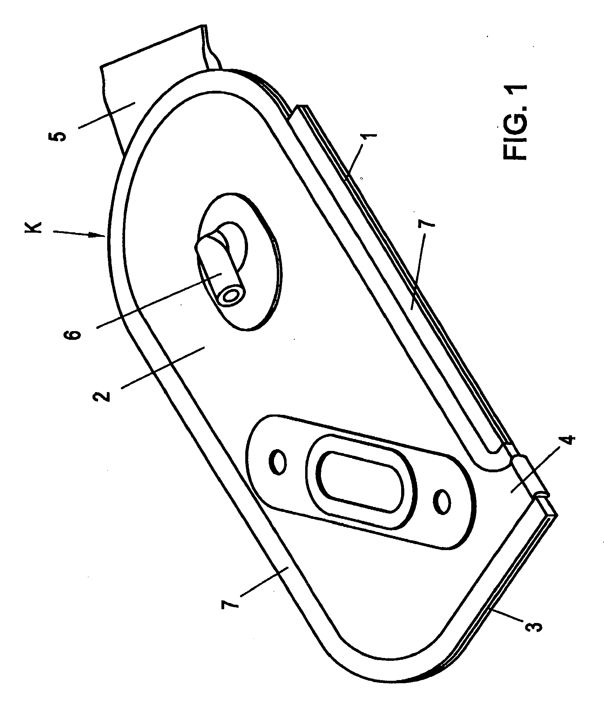

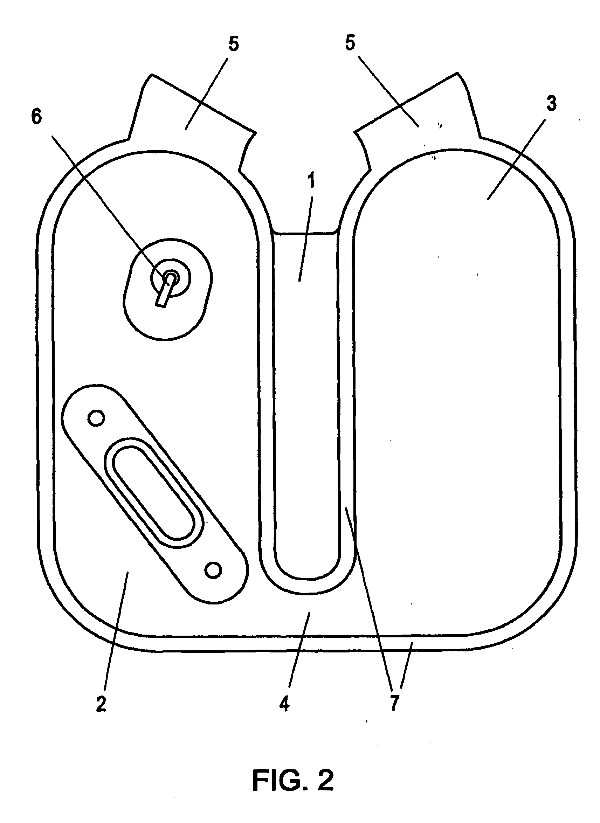

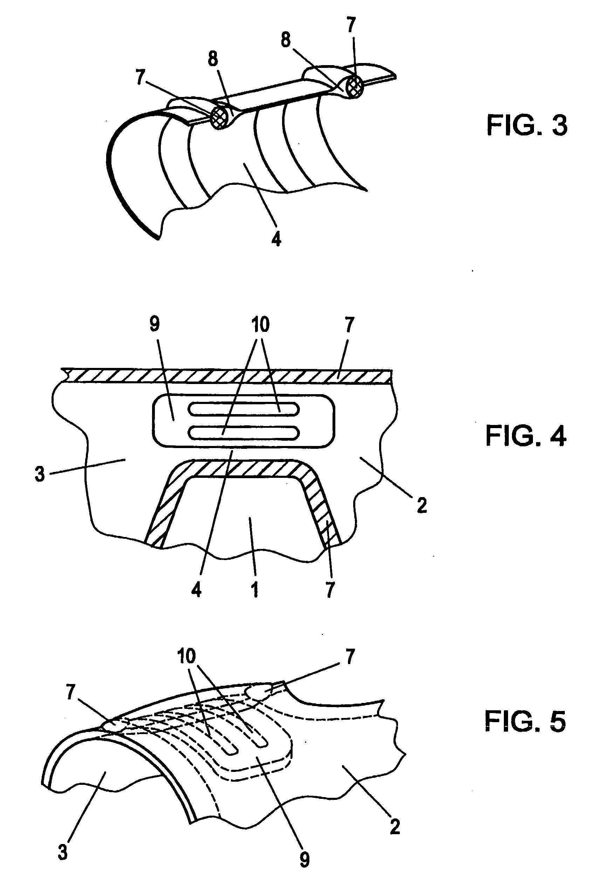

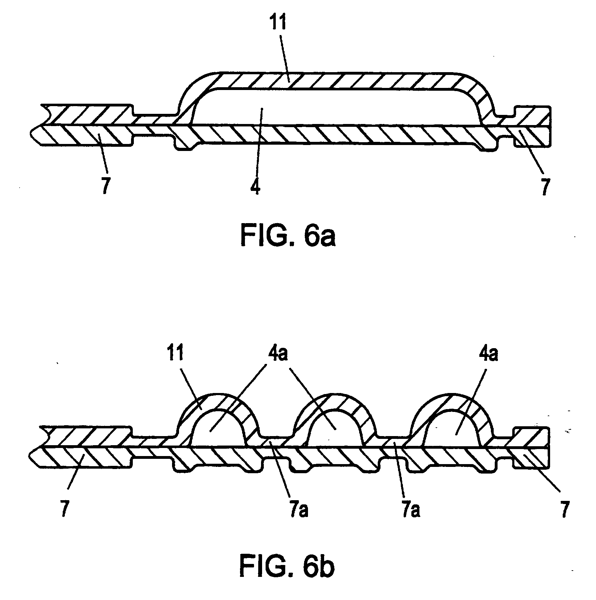

Die Fig. 1 zeigt ein Stützkissen für einen Fahrzeugsitz, bestehend aus einer zusammengefalteten Doppel-Folienblase, als Beispiel eines fluidbefüllbaren Körpers, Fig. 2 ist eine Darstellung der Folienblase der Fig. 1 in aufgefaltetem Zustand, Fig. 3 zeigt ein Detail eines gekrümmten Verbindungskanals zwischen zwei Teilbereichen eines Körpers ähnlich den Fig. 1 und 2, Fig. 4 stellt ein Detail eines Verbindungskanals in aufgefaltetem Zustand dar, Fig. 5 ist eine Darstellung des Verbindungskanals der Fig. 4 in gekrümmtem Zustand, ähnlich der Fig. 3, und die Fig. 6a und 6b zeigen Querschnitte im Bereich des Verbindungskanals einerseits für eine nicht der Erfindung entsprechende und andererseits für eine erfindungsgemäße Ausführungsform des Körpers.

Die Fig. 1 zeigt, zur grundsätzlichen Veranschaulichung des Erfindungsgegenstandes, einen fluidbefüllbaren, volumsveränderlichen Körper K, etwa eine Lordoseblase oder ähnliches Stützkissen für den Einbau in Fahrzeugsitzen, welcher Körper K aus zwei übereinanderliegenden, miteinander entlang des umlaufenden Randes verbundenen, d.h verschweißten Folien, vorzugsweise aus Kunststoffmaterial, besteht. Durch Faltung entlang eines Scharnierbereiches 1 bilden die Folien zwei übereinanderliegende Teilbereiche 2, 3 des aufblasbaren Körpers K, wobei durch die Folien zumindest ein allenfalls den Scharnierbereich 1 durchquerender Verbindungskanal 4 zwischen den beiden Teilbereichen 2, 3 des befüllbaren Körpers ausgebildet ist. Zusätzlich zum Scharnierbereich 1 können weitere Laschen 5 die Lage der Teilbereiche 2, 3 gegeneinander fixieren. Über einen Fluidversorgungsanschluß 6, vorzugsweise für Druckluft, wird der obere Teilbereich 2 und weiter über den Verbindungskanal 4 auch der untere Teilbereich 3 des Körpers versorgt und auch entleert.

Die Verbindung der übereinanderliegenden Folien des Körpers K ist im dargestellten Beispiel durch Verschweißen unter Bildung einer umlaufenden Schweißraupe 7 bewerkstelligt, welche auch den Verbindungskanal 4 seitlich begrenzt. Diese Schweißraupe 7 wird durch die Verdrängung des Materials der Folien gebildet.

In der in Fig. 1 gezeigten Stellung des Körpers K ist der Verbindungskanal 4 stark gekrümmt, sodaß aufgrund der Zugspannung in der außenliegenden Folie und der Druckspannung in der innenliegenden Folie diese mit relativ hoher Kraft aneinander gepresst werden. Im Bereich der Schweißraupen 7 am Rand des Verbindungskanals 4 vergrößert sich bei Bildung der Schweißraupe 7 der Abstand der Folien zueinander, und diese Folien werden unmittelbar benachbart diesen Schweißraupen 7 und somit über zumindest einen Teil der Breite des Verbindungskanals 4 auch beabstandet voneinander gehalten, wodurch die Querschnittsbereiche 8 des Verbindungskanals 4 auch in geknicktem oder stark gekrümmtem Zustand offen gehalten werden. Damit ist auch die Fluidverbindung zwischen den Teilbereichen 2, 3 des Körpers K immer offengehalten.

Um diesen Effekt noch zu verbessern, können eventuell die Schweißraupen 7 dicker ausgebildet sein, als es zur sicheren Verbindung der übereinanderliegenden Folien notwendig ist. Dies kann durch geeignete Werkzeugform bewerkstelligt werden, auch durch Überdruck zwischen den beiden zu verbindenden Folien während des Schweißvorganges und etwas ausgeprägter Werkzeugkontur kurz vor dem Schweißrand, damit die Folien hier den offenen Querschnittsbereich 8 des Verbindungskanals 4 bilden können.

Durch sich im wesentlichen parallel zu den randseitigen Schweißraupen 7, im wesentlichen in Längsrichtung des Verbindungskanals 4 erstreckende weitere Schweißraupen wird die vorliegende Erfindung realisiert.

In den Fig. 4 und 5 ist dargestellt, wie im Verbindungskanal 4 ein Folienstück 9 als Abstandhalter eingesetzt sein kann. Dieses Abstandhalter-Element 9 ist zwischen die den Körper K bildenden Folien eingesetzt und kann auf herkömmliche Weise fixiert sein. Das Folienstück 9 weist sich in Längsrichtung des Verbindungskanals 4 erstreckenden Schlitze 10 zur Verbesserung der Durchströmbarkeit des Verbindungskanals 4 auf.

In der Fig. 6a ist schematisch im Querschnitt eine Konstruktion dargestellt, bei welcher die bei Faltung des Körpers (K) außen liegenden Folie eine größere Breite aufweist als die untere Folie. Dieser Effekt kann durch unterschiedliche Materialbreite von Beginn an oder auch durch ein Zusammenschieben während des Schweißvorganges hervorgerufen werden. Die breitere Folie bildet dabei zumindest eine Aufwölbung 11 aus und bildet dadurch den auch bei Abknicken des Verbindungsbereiches der Teilbereiche 2, 3 des Körpers K offen gehaltenen Verbindungskanal 4 aus.

Bei der Ausbildung von mehreren Aufwölbungen 11 oder Wellen bilden sich, wie die die Erfindung beispielhaft veranschaulichende Fig. 6b zeigt, zwischen diesen mehreren Aufwölbungen 11 entlang der Breite des durch die Schweißraupen 7 begrenzten Verbindungsbereiches mehrere parallele Verbindungskanäle 4a aus. Dabei sind zur Fixierung der Aufwölbungen 11 als auch zum sicheren Offenhalten der Verbindungskanäle 4a zwischen jeweils zwei Aufwölbungen 11 zusätzliche Schweißraupen 7a vorgesehen.

## Patentansprüche

1. Fluidbefüllbarer, volumsveränderlicher Körper (K), bestehend aus zwei übereinanderliegenden, miteinander entlang des umlaufenden Randes durch Verschweißen verbundenen Folien, vorzugsweise aus Kunststoffmaterial, welche Folien überdies einen Scharnierbereich bilden, entlang welches Scharnierbereichs die Folien unter Bildung zweier zumindest teilweise übereinanderliegender Teilbereiche des aufblasbaren Körpers gefaltet sind, und wobei durch die Folien zumindest ein allenfalls den Scharnierbereich durchquerender Verbindungskanal (4) zwischen den beiden Teilbereichen des befüllbaren Körpers ausgebildet ist, der seitlich durch die bei Verbindung der Folien entstandenen Schweißraupen (7) begrenzt ist, **dadurch gekennzeichnet, dass** im Verlauf zumindest eines Verbindungskanals (4) zumindest ein Element (7, 9, 11) vorgesehen ist, welches die Folien auch in entlüftetem Zustand des Körpers (K) über zumindest einen Teil der Breite des Verbindungskanals (4) beabstandet hält, indem die bei Verbindung der Folien entstandenen Schweißraupen (7) einen Abstand zwischen den Folien zumindest im unmittelbaren Nahbereich (8) aufrechterhalten, wobei ferner zwischen den den Verbindungskanal (4) seitlich begrenzenden Schweißraupen (7) weitere Schweißraupen im wesentlichen in Längsrichtung des Verbindungskanals (4) vorgesehen sind.

2. Körper nach Anspruch 1, **dadurch gekennzeichnet, dass** die bei der Verbindung der Folien entstandenen, den Verbindungskanal (4) seitlich begrenzenden Schweißraupen (7) dicker ausgebildet sind als zur sicheren Verbindung der übereinanderliegenden Folien notwendig ist.

3. Körper nach Anspruch 1 oder Anspruch 2, **dadurch gekennzeichnet, dass** im Verbindungskanal (4) zumindest ein Abstandhalter-Element (9) eingesetzt ist.

4. Körper nach Anspruch 3, **dadurch gekennzeichnet, dass** das Abstandhalter-Element durch ein zwischen die den Verbindungskanal (4) bildenden Folienabschnitte eingesetztes zusätzliches Folienstück (9) mit sich in Längsrichtung des Verbindungskanals erstreckenden Schlitzen (10) oder Nuten gebildet ist.

5. Körper nach Anspruch 3, **dadurch gekennzeichnet, dass** ein Abstandhalter-Element durch einen sich im Wesentlichen in Längsrichtung des Verbindungskanals (4) erstreckenden, schmalen Körper gebildet ist.

6. Körper nach Anspruch 3, **dadurch gekennzeichnet, dass** zumindest ein Abstandhalter-Element aus fluiddurchlässigem Material im Verbindungskanal (4) eingesetzt ist.

7. Fluidbefüllbarer, volumsveränderlicher Körper (K), bestehend aus zwei übereinanderliegenden, miteinander entlang des umlaufenden Randes verbundenen, vorzugsweise verschweißten Folien, vorzugsweise aus Kunststoffmaterial, welche Folien überdies einen Scharnierbereich bilden, entlang welches Scharnierbereichs die Folien unter Bildung zweier zumindest teilweise übereinanderliegender Teilbereiche des aufblasbaren Körpers gefaltet sind, und wobei durch die Folien zumindest ein allenfalls den Scharnierbereich durchquerender Verbindungskanal (4) zwischen den beiden Teilbereichen des befüllbaren Körpers ausgebildet ist, **dadurch gekennzeichnet, dass** im Verlauf zumindest eines Verbindungskanals (4) zumindest ein Element (7, 9, 11) vorgesehen ist, welches die Folien auch in entlüftetem Zustand des Körpers (K) über zumindest einen Teil der Breite des Verbindungskanals (4) beabstandet hält, wobei eine der den Körper (K) begrenzenden Folien, vorzugsweise die bei Faltung des Körpers (K) außen liegende Folie, zumindest im Bereich des Verbindungskanals (4) eine größere Breite aufweist als die gegenüberliegende Folie und zur Bildung des oder jedes Verbindungskanals (4, 4a) eine oder mehrere Aufwölbungen (11) ausbildet, wobei ferner zwischen jeweils zwei von mehreren Aufwölbungen (11) zusätzliche Schweißraupen (7a) vorgesehen sind.

## Claims

1. Fluid fillable, variable volume chamber (K), consisting of two foils, preferably from plastic material, which are positioned one over the other and which are connected with each other by welding along the circumferential edge. These foils, moreover, form a hinge region. The foils are folded along this hinge region, forming two partial sections of the inflatable body, which are at least partially positioned one over the other. The foils form at least one connecting channel (4) between the two partial sections of the fillable body, and this connection channel, at the most, traverses the hinge region and is laterally bordered by the welding beads (7) generated during the connection of the foils, **characterized in that**, in the course of at least one connecting channel (4), at least one element (7, 9, 11) is provided for, which, even in the deaerated condition of the body (K), keeps the foils spaced apart over at least one part of the width of the connecting channel (4). For this purpose, the welding beads (7) generated during the connection of the foils maintain a distance between the foils, at least in the direct close proximity (8). Moreover, further welding beads are provided for, between the welding beads (7) which laterally border the connecting channel (4), especially in longitudinal direction of the connecting channel (4).

2. Body according to claim 1, **characterized in that** the welding beads (7) which are generated during the connection of the foils and which laterally border the connecting channel (4) are thicker than it would be necessary for the safe connection of the foils positioned one over the other.

3. Body according to claim 1 or claim 2, **characterized in that** at least one spacer element (9) is inserted in the connecting channel (4).

4. Body according to claim 3, **characterized in that** the spacer element is formed by an additional foil piece (9) which is inserted between the foil sections which form the connecting channel (4), and which is provided with slots (10) or grooves extending in longitudinal direction of the connecting channel.

5. Body according to claim 3, **characterized in that** a spacer element is formed by a narrow body which mainly extends in longitudinal direction of the connecting channel (4).

6. Body according to claim 3, **characterized in that** at least one spacer element made of fluid-permeable material is inserted in the connecting channel (4).

7. Fluid fillable, variable volume chamber (K), consisting of two - preferably welded - foils, preferably from plastic material, which are positioned one over the other and which are connected with each other along the circumferential edge. These foils, moreover, form a hinge region. The foils are folded along this hinge region, forming two partial sections of the inflatable body, which are at least partially positioned one over the other. The foils form at least one connecting channel (4) between the two partial sections of the fillable body, and this connection channel, at the most, traverses the hinge region, **characterized in that**, in the course of at least one connecting channel (4), at least one element (7, 9, 11) is provided for, which, even in the deaerated condition of the body (K), keeps the foils spaced apart over at least one part of the width of the connecting channel (4). For this purpose, the width of one of the foils which border the body (K), namely preferably the foil lying on the outside during the folding of the body (K), is - at least in the area of the connecting channel (4) - greater than that of the opposite foil, and the aforesaid foil forms one or several bulges (11) for the formation of the or of each connecting channel (4, 4a). Furthermore, additional welding beads (7a) are provided for between two of several bulges (11) in each case.

## Revendications

1. Corps (K) à volume variable remplissable d'un fluide, composé de deux films superposés, reliées par soudage le long du bord périphérique, de préférence en matière plastique, ces films formant de plus une zone charnière le long de laquelle les films sont pliés en formant deux zones partielles au moins partiellement superposées du corps gonflable, les films formant un canal de connexion (4) traversant la zone charnière et reliant les deux zones partielles du corps remplissable, qui est limité sur les côtés par les cordons de soudage (7) formés lors de l'assemblage des films, **caractérisé par le fait que** sur le parcours d'au moins un canal de connexion (4) un élément (7, 9, 11) est prévu, qui écarte les films sur au moins une partie de la largeur du canal de connexion (4) même lorsque le corps (K) est purgé, du fait que les cordons de soudure (7) formés lors de l'assemblage maintiennent entre les films un écartement au moins dans la zone de proximité (8), avec de plus des cordons de soudure supplémentaires sont prévus essentiellement dans le sens longitudinal du canal de connexion (4) entre les cordons de soudure (7) limitant le canal de connexion (4) sur les côtés.

2. Corps selon la revendication 1, **caractérisé par le fait que** les cordons de soudure (7) formés lors de l'assemblage des films et limitant le canal de connexion (4) sont plus épais qu'il n'est nécessaire pour l'assemblage sûr des films superposés.

3. Corps selon les revendications 1 ou 2, **caractérisé par le fait qu'**au moins un élément écarteur (9) soit inséré dans le canal de connexion (4).

4. Corps selon la revendication 3, **caractérisé par le fait que** l'élément écarteur est formé par une section de film supplémentaire (9) inséré entre les sections de films formant le canal de connexion (4) et possédant des fentes (10) ou gorges disposées dans le sens longitudinal du canal de connexion (4).

5. Corps selon la revendication 3, **caractérisé par le fait qu'**un élément écarteur est formé par un corps étroit disposé pour l'essentiel dans le sens longitudinal du canal de connexion (4).

6. Corps selon la revendication 3, **caractérisé par le fait qu'**au moins un élément écarteur en matière perméables aux fluides est inséré dans le canal de connexion (4).

7. Corps (K) à volume variable remplissable d'un fluide, composé de deux films superposés, reliées le long du bord périphérique, de préférence par soudage, de préférence en matière plastique, ces films formant de plus une zone charnière le long de laquelle les films sont pliés en formant deux zones partielles au moins partiellement superposées du corps gonflable, les films formant un canal de connexion (4) traversant la zone charnière et reliant les deux zones partielles du corps remplissable, **caractérisé par le fait que** sur le parcours d'au moins un canal de connexion (4) un élément (7, 9, 11) est prévu, qui écarte les films sur au moins une partie de la largeur du canal de connexion (4) même lorsque le corps (K) est purgé, dans quel cas d'un des films limitant le corps (K), de préférence le film se trouvant à l'extérieur lors du pliage du corps (K), présente une largeur supérieure à celle du film opposé, du moins dans la zone du canal de connexion (4), et forme un ou plusieurs bombements (11) pour la formation du ou de chaque canal de connexion (4, 4a), des cordons de soudure supplémentaires (7a) étant prévus de plus entre respectivement deux des bombements (11) multiples.
